# EUROPEAN PATENT APPLICATION

(11) **EP 2 907 747 A1**
(43) Date of publication of application: **19.08.2015**
(21) Application number: 15154623.1
(22) Date of filing: 11.02.2015
(51) Int. Cl.: B64C 11/30, B64C 11/02, B64D 27/00

(54) **Cyclic pitch actuation system for counter-rotating propellers**

(30) Priority: 12.02.2014 US 201461939091 P; 29.09.2014 US 201414499618
(71) Applicant: Hamilton Sundstrand Corporation, Windsor Locks, CT 06096-1010 (US)
(72) Inventor: Perkinson, Robert H., Stonington, CT Connecticut 06378 (US)
(74) Representative: Leckey, David Herbert

(57) **Abstract**

A counter-rotating propeller system (14) comprises a cyclic pitch system (60) connected to a first plurality of propeller blades (18) and a variable pitch system (100) connected to a second plurality of propeller blades (20). The first plurality of propeller blades (18) and the second plurality of propeller blades (20) are configured to rotate about a common axis (A).

## Description

### BACKGROUND

Design of rotors and propellers is often quite complex. A large number of factors must be taken into account, including flexure of the rotor under heavy loads and the required motions of the rotor blades with respect to the drive mechanism.

Rigid turboprop propeller systems provide collective pitch control of the propeller blades. Pitch angles ranging from a fully feathered minimum drag angle to pitch angles which provide reverse thrust are typically provided to provide propeller speed and power management along a propeller axis of rotation. Inflow angles not along the axis of rotation due to aircraft maneuvers generate bending moments on the propeller shaft and subsequent twisting of the airframe. The resulting bending moments are rather large and conventional propeller systems are rigidly structured therefore.

Fully articulated rotors such as those of helicopters provide cyclic and collective pitch of the rotor blades. Articulation of the rotor disc plane vectors the rotor thrust to provide fore, aft and lateral movement of the helicopter with minimal bending moment of the rotor shaft. As compared to rigid turboprop propeller systems, articulated rotor systems of a helicopter are significantly more complex.

Prop rotors are used as both propellers and rotors in aircraft such as a tilt rotor aircraft. A tilt rotor or tilt wing aircraft typically employs a pair of rotor systems which are pivotable such that the rotors may assume a vertical or horizontal orientation. In a horizontal orientation (i.e., horizontal rotor plane), the aircraft is capable of hovering flight, while in a vertical orientation (i.e., vertical rotor plane), the aircraft is propelled in the same manner as conventional propeller driven fixed-wing aircraft. Typically, tilt rotor aircraft utilize fully articulated rotors to provide effective hover and slow speed control. Tilt rotor aircraft therefore provide a combination of advantages and complexities of both fixed wing turboprop aircraft and helicopter systems.

Accordingly, it is desirable to provide an actuation system to incorporate cyclic pitch features into conventional rigid mounted prop rotor systems without the complexities inherent in fully articulated rotors.

### SUMMARY

A counter-rotating propeller system comprises a cyclic pitch system connected to a first plurality of propeller blades and a variable pitch system connected to a second plurality of propeller blades. The first plurality of propeller blades and the second plurality of propeller blades are configured to rotate about a common axis.

These and other features may be best understood from the following drawings and specification.

### BRIEF DESCRIPTION OF THE DRAWINGS

Figure 1 is a schematic representation of an example counter-rotating propeller system.
Figure 2 is a cross-sectional view of the counter-rotating propeller system.
Figure 3 is a cross-sectional view of an example planetary gear train for the counter-rotating propeller system.

### DETAILED DESCRIPTION

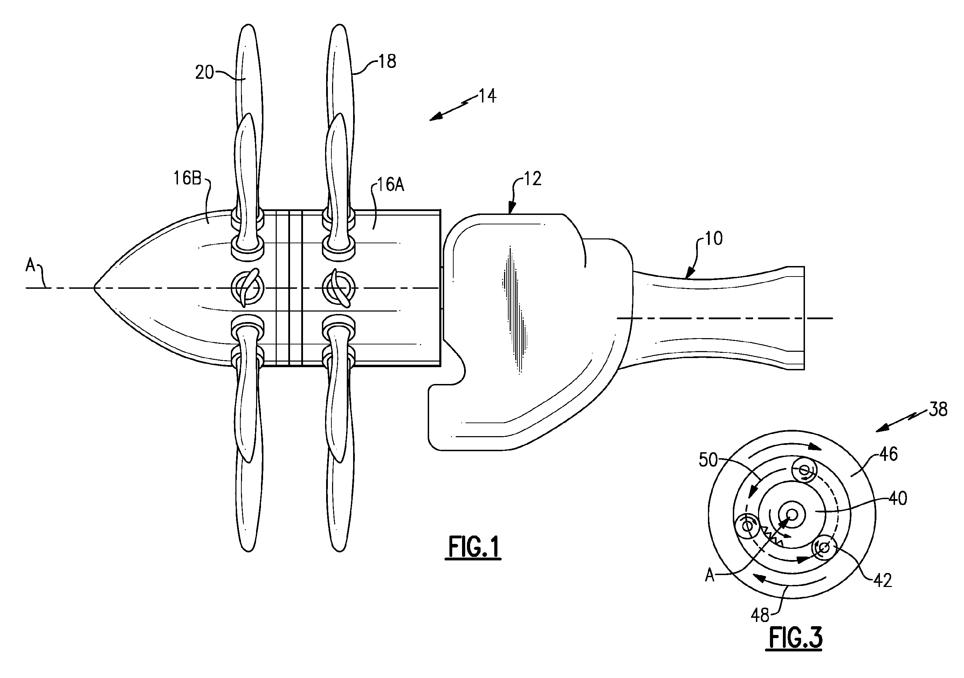

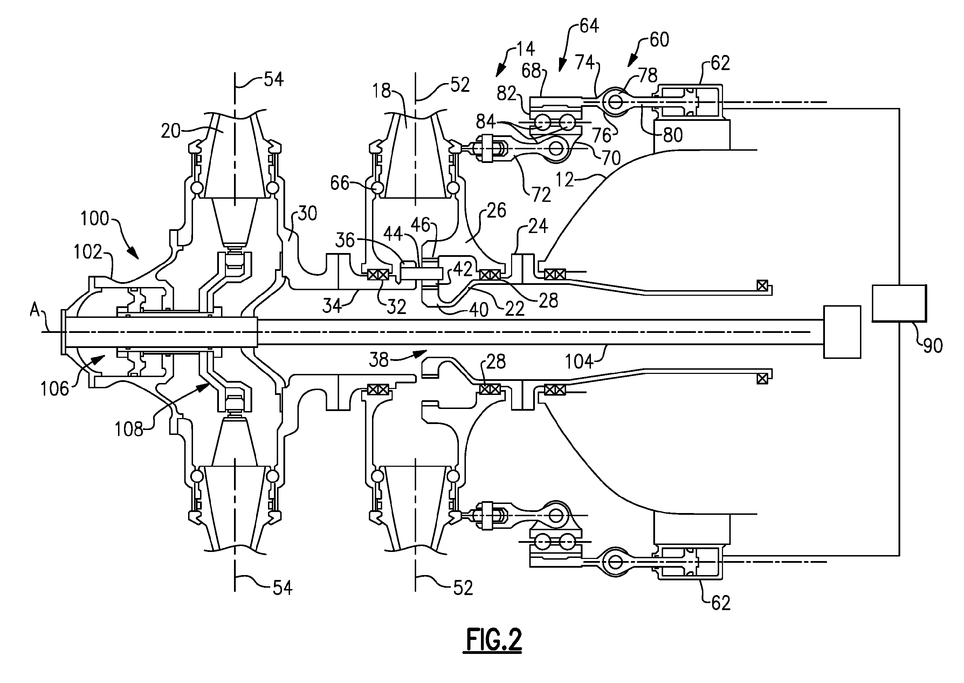

Referring to Figure 1, an example self-contained counter-rotating propeller system 14 is driven by a gas turbine engine 10 through a reduction gearbox 12. The counter-rotating propeller system 14 drives a first plurality of propeller blades 18 in a first direction about a main axis A and a second plurality of propeller blades 20 in an opposite direction about the axis A. The counter-rotating propeller system 14 is covered by cowlings (also sometimes referred to as spinners) 16A, 16B. The cowlings 16A, 16B cover a gear train (Figure 2) that provides the counter-rotation of the first and second pluralities of propeller blades 18, 20. The entire counter-rotating propeller system 14 is disposed within the cowlings 16A, 16B and is separate from the gas turbine engine 10 and the reduction gearbox 12.

In the illustrated example, the counter-rotating propeller system 14 requires only a first input shaft 22 (Figure 2) from the gas turbine engine 10. A desired differential rotation is provided by the gear train enclosed within the cowlings 16A, 16B. The differential rotation is provided by the torque split through the gear train which provides approximately equal but opposite torque to the first and second plurality of propeller blades 18, 20. Alternatively, torque split could be non-equally allocated between the first and second plurality of propeller blades 18, 20.

Referring to Figure 2, the example counter-rotating propeller system 14 includes a first hub 26 that supports the first plurality of propeller blades 18 and is supported about the first input shaft 22. The first input shaft 22 includes a flange 24 that provides for securing the first input shaft 22 to the reduction gearbox 12. No other driving connection is required between the reduction gearbox 12 and the counter-rotating propeller system 14.

The first hub 26 includes bearings 28 that support the first hub 26 for rotation about the first input shaft 22. The first hub 26 is supported on the first input shaft 22 by the bearings 28 but is rotatable independent of rotation of the first input shaft 22. A second input shaft 34 is supported within the first hub 26 by bearings 32 and is rotatable independent of both the first hub 26 and the first input shaft 22.

A second hub 30 is attached to the second input shaft 34 and rotates with the second input shaft 34. The first input shaft 22 provides the driving input to an example planetary gear train 38. The planetary gear train 38 includes a sun gear 40 that is mounted to the first input shaft 22. The sun gear 40 is driven by and at the same speed as the first input shaft 22. The sun gear 40 is surrounded by a plurality of planet gears 42 that are supported on a planet carrier 44. The planet carrier 44 is in turn supported by a flange 36 of the second input shaft 34. The planet gears 42 in turn drive a ring gear 46. The ring gear 46 is defined on an inner surface of the first hub 26 and drives rotation of the first hub 26.

Referring to Figure 3 with continued reference to Figure 2, the planetary gear train 38 operates by driving the sun gear 40 with the first input shaft 22. The sun gear 40 drives the planet gears 42 through the meshing engagement there between. Because the planet gears 42 are supported by the planet carrier 44 which is mounted to the second input shaft 34, the second input shaft 34 will rotate in a direction indicated by arrow 50 common with rotation of the first input shaft 22.

The planet gears 42 themselves rotate in a direction opposite that of the sun gear 40 and translate that motion to the ring gear 46. The translated motion to the ring gear 46 will result in the first hub 26 rotating in a direction indicated by arrow 48 about the axis A. The second input shaft 34 will rotate in the direction indicated by the arrow 50 about the sun gear 40 and thereby drive the second hub 30 in a direction opposite that of the first hub 26 about the axis A.

Because the planetary gear train 38 comprises the first hub 26 and the second input shaft 34, the planetary gear train 38 is housed entirely within the counter-rotating propeller system 14. Therefore, implementation of the planetary gear train 38 does not require additional modifications to the reduction gearbox 12 which is driven by the gas turbine engine 10.

A pitch angle of each of the first and second plurality of propeller blades 18, 20 is variable to optimize performance and allow the counter-rotating propeller system 14 to provide a directional influence on an airframe of an aircraft, such as a fixed wing or hovering aircraft. Changes in pitch angle in the first plurality of propeller blades 18 can be made independently from changes in pitch angle of the second plurality of propeller blades 20.

In the illustrated example of Figure 2, a cyclic pitch actuation system 60 provides cyclic pitch variations to the first plurality of propeller blades 18. The cyclic pitch actuation system 60 includes cyclic pitch actuators 62 connected to the first plurality of propeller blades 18 by a first linkage 64. Although only two cyclic pitch actuators 62 are shown in the drawings, three or more cyclic pitch actuators 62 could be placed around a circumference of the reduction gearbox 12.

The cyclic pitch actuators 62 can be activated independently of each other to provide a varied cyclic pitch to the first plurality of propeller blades 18 depending on the circumferential location of the each of the first plurality of propeller blades 18. The cyclic pitch actuators 62 cause the first plurality of propeller blades 18 to rotate about an axis 52 relative to the first hub 26 on bearings 66.

In the illustrated example, the first linkage 64 includes a non-rotating hoop 68, a rotating hoop 70, and a cam arm 72. The non-rotating hoop 68 includes an arm 74 that forms a socket 76 at a distal end to accept a spherical end 78 on an actuator rod 80 of the cyclic pitch actuator 62 to form a spherical joint. The spherical joint increase the freedom of movement between the non-rotating hoop 68 and the cyclic pitch actuators 62. The increased freedom of movement from the spherical joint allows an axis of the non-rotating hoop 68 and the rotating hoop 70 to be non-parallel with the axis A of the first and second plurality of propeller blades 18, 20. The non-rotating hoop 68 also includes an outer race 82 that supports bearings 84 on a radially inner side.

The rotating hoop 70 includes an inner race 86 that supports the bearings 84 on a radially outer side and rotates with the first plurality of propeller blades 18. The rotating hoop 70 is attached to each of the first plurality of propeller blades 18 through the cam arm 72. The cam arm 72 is rotatably attached to the rotating hoop 70 about an axis that extends approximately tangential to a circumference of the rotating hoop 70. The cam arm 72 is rotatably attached to the first plurality of propeller blades 18 about an axis that is generally perpendicular to the axis of the rotating hoop 70.

The cyclic pitch actuation system 60 changes the cyclic pitch of the first plurality of propeller blades 18 by extending or retracting one or more of the cyclic pitch actuators 62 to change an axial location of the non-rotating hoop 68 and the rotating hoop 70. When the axial location of the non-rotating hoop 68 and the rotating hoop 70 changes, the pitch of each of the first plurality of propeller blades 18 changes in a circumferential region adjacent the cyclic pitch actuator 62 that moved. Therefore, as the first plurality of propeller blades 18 rotate in a cycle, the pitch of each of the blades can change based on the circumferential location of the individual blades such that the pitch angle among the first plurality of propeller blades 18 is not uniform.

In operation, the counter-rotating propeller system 14 generates a once per revolution (1P) variation in blade load by having a non-uniform cyclic pitch controlled by a controller 90. The controller 90 is configured to position the cyclic pitch actuators 62 to produce a moment about the axis A. While an axis of the thrust vector remains perpendicular to the plane of the first plurality of propeller blades 18, the variation in blade load creates a bending moment along the axis A which appears fixed in relation to the aircraft. Such 1P variations may occur during aircraft maneuvering when inflow angles are not on the propeller axis A of rotation.

The conventional blade mounting arrangements accommodate these off axis forces by rigidly mounting propeller blades to a hub to prevent flapping and rigidly mount the first input shaft 22 to the reduction gearbox 12. Off-axis forces are thereby transmitted directly from the first plurality of propeller blades 18 to the airframe.

The present invention advantageously utilizes this conventional mounting arrangement to generate aircraft attitude control through generation of a moment about the axis A. Movement of the cyclic pitch actuators 62 can provide a moment in any angular direction while the linear deflection of the cyclic pitch actuators 62 generates a magnitude of propeller thrust. Alternatively, it should be noted that the cyclic pitch actuation system 60 can also operate with the cyclic pitch actuators 62 moving in unison such that the first plurality of propeller blades 18 can function as a tradition variable pitch system.

The second plurality of propeller blades 20 include a variable pitch system 100. In the illustrated example, a pitch of the second plurality of propeller blades 20 varies in approximate unison. The variable pitch system 100 includes a hydraulic pitch change actuator 102 in communication with an oil transfer tube 104. Oil supplied through the oil transfer tube 104 is metered by a pitch change actuator piston 106 to hydraulically operate a linkage 108 of the variable pitch system 100 to change the pitch of each of the second plurality of propeller blades 20 to provide a desired amount of thrust.

The preceding description is exemplary rather than limiting in nature. Variations and modifications to the disclosed examples may become apparent to those skilled in the art that do not necessarily depart from the scope of this disclosure. The scope of legal protection given to this disclosure can only be determined by studying the following claims.

## Claims

1. A counter-rotating propeller system (14) comprising:
a cyclic pitch system (60) connected to a first plurality of propeller blades (18); and
a variable pitch system (100) connected to a second plurality of propeller blades (20), wherein the first plurality of propeller blades (18) and the second plurality of propeller blades (20) are configured to rotate about a common axis (A).

2. The system of claim 1, further comprising a first hub (26) supporting the first plurality of propeller blades (18), the first hub (26) supported for rotation directly by a first input shaft (22) such that the first hub (26) is rotatable relative to the first input shaft (22).

3. The system of claim 2, further comprising a second input shaft (34) supported by the first hub (26) for rotation relative to the first hub (26) and the first input shaft (22).

4. The system of claim 3, further comprising a second hub (30) supporting the second plurality of propeller blades (20), the second hub (30) supported by the second input shaft (34).

5. The system of claim 4, further comprising a planetary gear train (38) driven by the first input shaft (22), the planetary gear train (38) including a sun gear (40) attached for rotation with the first input shaft (22), at least one planet gear (42) supported on a planet gear carrier (44) attached to the second input shaft (34), and a ring gear (46) defined by the first hub (26), wherein the planetary gear train (38) drives the first hub (26) in a first direction (48) and the second hub (30) in a second direction (50) opposite the first direction (48).

6. The system of any preceding claim, wherein the cyclic pitch system (60) includes a plurality of actuators (62) configured to vary a pitch between at least two of the first plurality of propeller blades (18).

7. The system of claim 6, wherein the cyclic pitch system (60) includes a first hoop (68) rotatably engaging a second hoop (70).

8. The system of claim 7, wherein the first hoop (68) is non-rotational and attached to the plurality of actuators (62) and the second hoop (70) rotates with the first plurality of propeller blades (18).

9. The system of claim 8, wherein the first hoop (68) is attached to the plurality of actuators (62) with a spherical joint.

10. The system of any preceding claim, wherein the variable pitch system (100) includes an actuator (102) disposed in a second hub (30) configured to adjust a pitch of the second plurality of propeller blades (20).

11. A method of controlling a counter-rotating propeller system (14) comprising:
cyclically changing a pitch of a first plurality of propeller blades (18) with a cyclic pitch system (60); and
variably changing a pitch of a second plurality of propeller blades (20) with a variable pitch system (100).

12. The method of claim 11, wherein the pitch of the first plurality of propeller blades (18) varies depending on a circumferential location of each of the first plurality of propeller blades (18).

13. The method of claim 11 or 12, wherein the pitch of the second plurality of propeller blades (20) is varied approximately equally.

14. The method of claim 11, 12 or 13, wherein the cyclic pitch system (60) includes a first hoop (68) rotatably engaging a second hoop (70) and the first hoop (68) is non-rotational and attached to a plurality of actuators (62) and the second hoop (70) rotates with the first plurality of propeller blades (18).

15. The method of any of claims 11 to 14, wherein the variable pitch system (100) includes an actuator (102) disposed in a hub (30) configured to adjust a pitch of the second plurality of propeller blades (20).
